# EUROPEAN PATENT APPLICATION

(11) **EP 2 034 584 A2**
(43) Date of publication of application: **11.03.2009**
(21) Application number: 08075655.4
(22) Date of filing: 23.07.2008
(51) Int. Cl.: H02J 7/00

(54) **Power charging and supplying system**

(30) Priority: 01.08.2007 CN 200720121945 U; 18.04.2008 CN 200820093477 U
(71) Applicant: Unipower (China) Co., Ltd., Shenzhen City, Guangdong Province 518-104 (CN); Chuang, Long-Fu, Taipei (TW)
(72) Inventor: Chuang, Long-Fu, E. RD, Taipei, Taiwan (TW)
(74) Representative: Hämmalov, Juhan

(57) **Abstract**

A power charging and supplying system includes a battery box (50) for receiving a battery (90); and a charge and supply part (10) mounted to the battery box (50). The charge and supply part (10) is capable of electrically connected to the battery (90) to charge the battery (90) via power supply if the battery (90) is a secondary battery, and supplying power for electrical devices via the battery (90).

## Description

### Technical Field

The present invention relates to power charging and supplying systems, and particularly to a power charging and supplying system for charging batteries and supplying power for electrical devices.

### Background Art

Rechargeable batteries can be used repeatedly, thus being favored by the consumers. Conventionally, the rechargeable batteries are accommodated in a box, to prevent from being contacted with other metal elements to be short-circuited, which will cause the quantity of electricity of the rechargeable batteries to run off.

Currently, the batteries are recharged by battery chargers. A traditional battery charger includes two parts, one is a charge part for rectifying and reducing voltage of the commercial power, the other is a box for receiving batteries. The charge part and the box are manufactured integrated, which causes a big volume difficult to carry about. Additionally, when a person is on a trip, he always carries about many small electrical devices, such as a flashlight, a small fan, a mosquito killer, a camera, an MP3, a game device, a PDA, a mobile telephone, a GPS, and so on. Thus, the person always carries many types of battery chargers for the small electrical devices, which occupied a large space of a traveling bag of the person.

What is needed is to provide a power charging and supplying system for charging batteries and supplying power for electrical devices.

### Disclosure of the Invention

A power charging and supplying system includes a battery box for receiving a battery; and a charge and supply part mounted to the battery box. The charge and supply part is capable of electrically connected to the battery to charge the battery via power supply if the battery is a secondary battery, and supplying power for electrical devices via the battery.

Other objects, advantages and novel features of the invention will become more apparent from the following detailed description when taken in conjunction with the accompanying drawings, in which:

### Brief Description of Drawings

FIG. 1 is an exploded, isometric view of a power charging and supplying system in accordance with a first embodiment of the present invention, the power charging and supplying system including a battery box, a charge part, and a converter;
FIG. 2 is an enlarged view of the battery box of FIG. 1;
FIG. 3 is an enlarged view of the charge part of FIG. 1;
FIG. 4 is similar to FIG. 3, but viewed from another aspect;
FIG. 5 is an enlarged view of the converter of FIG. 1, but viewed from another aspect;
FIG. 6 is an enlarged view of the converter of FIG. 1;
FIG. 7 is an exploded, isometric view of a cable and a joint of the power charging and supplying system of FIG. 1;
FIG. 8 is an assembled view of the charge part and the battery box of FIG. 1;
FIG. 9 is an assembled view of the converter and the battery box of FIG. 1;

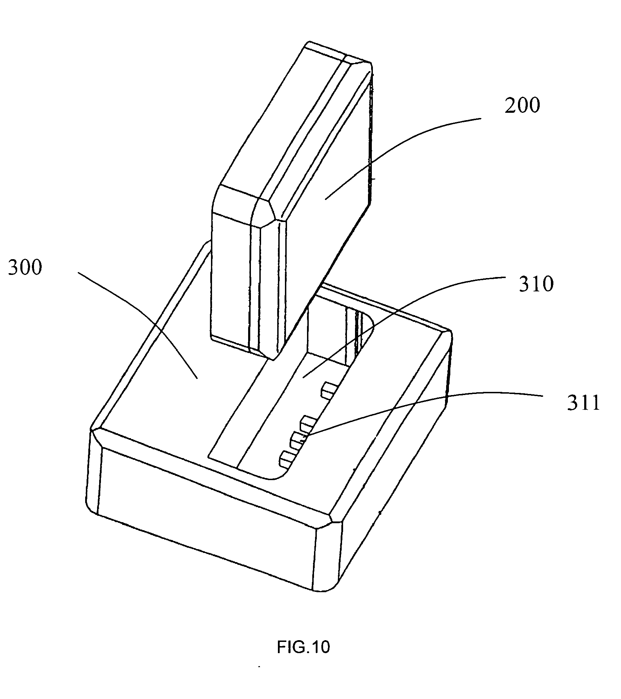

FIG. 10 is an isometric view of a power charging and supplying system in accordance with a second embodiment of the present invention, showing a converter or a charge part thereof defining a depressed portion for receiving a battery box thereof;
FIG. 11 is an exploded, isometric view of the charge part, the cable, and the joint of the first embodiment;
FIG. 12 is a plane, assembled view of the charge part and the cable of the first embodiment;
FIG. 13 is a plane, assembled view of the battery box, the converter, and the cable of the first embodiment;
FIG. 14 is a plane view of four types of joints for mobile telephones;
FIG. 15 is similar to FIG. 14, showing the joints being mounted to a bracket;
FIG. 16 is an exploded, isometric view of a power charging and supplying system in accordance with a third embodiment of the present invention, the power charging and supplying system including a charge and supply part, and a battery box;
FIG. 17 is similar to FIG. 16, but showing the charge and supply part from another aspect;
FIG. 18 is similar to FIG. 17, but showing the battery box from anther aspect;
FIG. 19 is an assembled, isometric view of FIG. 16; and
FIG. 20 is a block diagram of a charge circuit and a supply circuit of the charge and supply part of FIG. 1.

### Best Mode for Carrying out the Invention

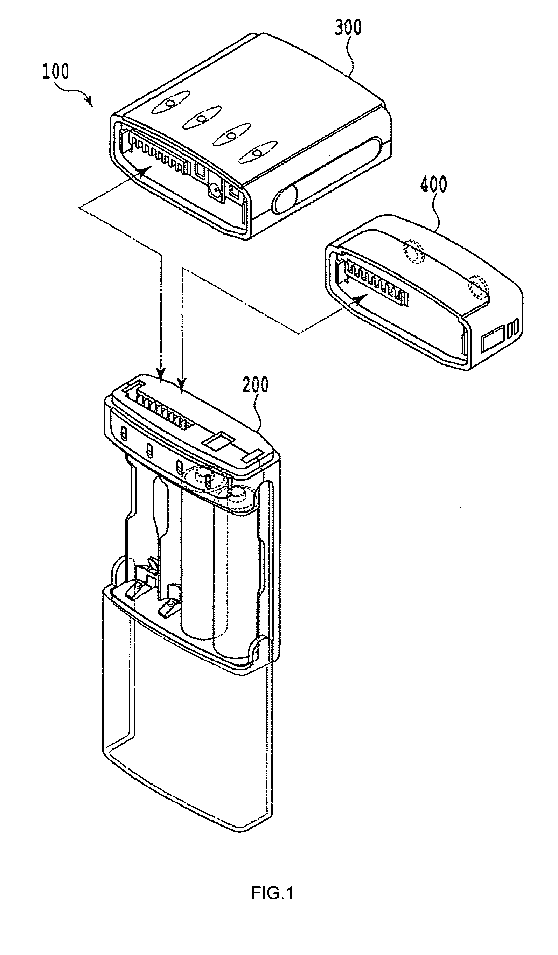

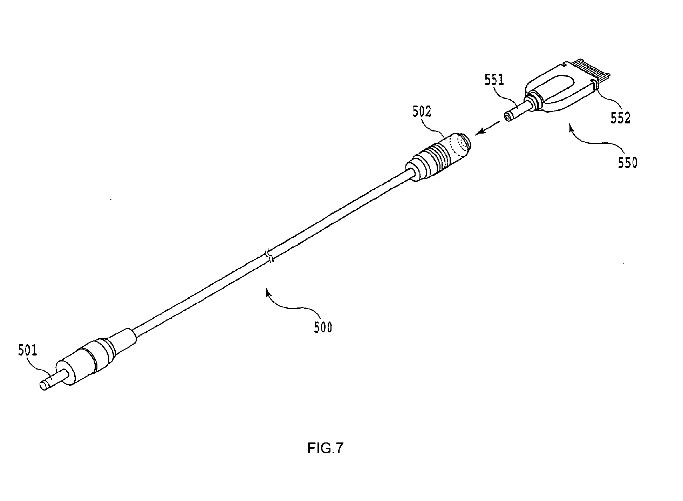

Referring to FIGs. 1 and 7, a power charging and supplying system in accordance with an embodiment of the present invention includes a battery box 200, a charge and supply part, a cable 500, and a joint 550. The charge and supply part includes a charge part 300 and a converter 400.

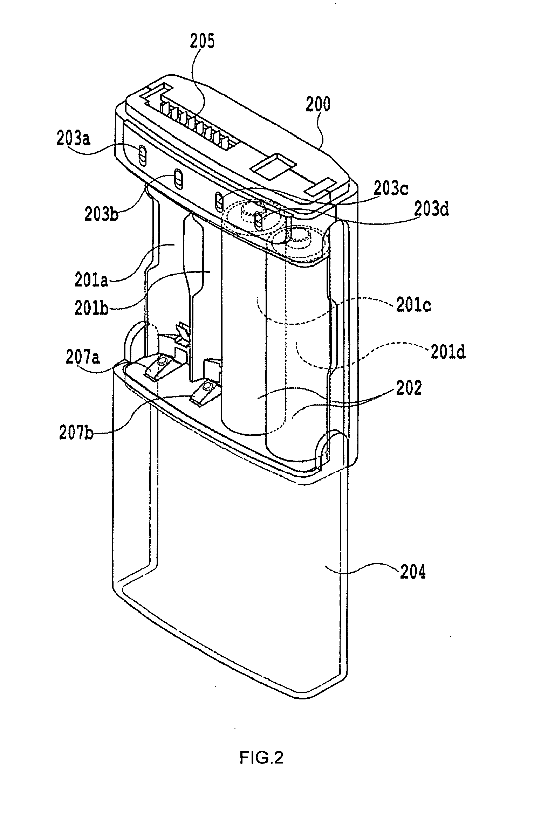

Referring also to FIG. 2, the battery box 200 includes a body (not labeled) and a cover 204 movably mounted to the body. The body includes a first battery space 201 a, a second battery space 201 b, a third battery space 201c, and a fourth battery space 201d, for receiving batteries therein. The cover 204 is used for covering the first, second, third, and fourth battery spaces 201 a, 201 b, 201 c, 201 d. Two elastic metal tabs are mounted to opposite ends of each of the first, second, third, and fourth battery spaces 201 a, 201 b, 201 c, 201d for electrically securing a battery in the battery space, such as first elastic metal tabs 207a in the first battery space 201 a, and second elastic metal tabs 207b in the second battery space 201 b. A first slidable button 203a, a second slidable button 203b, a third slidable button 203c, and a fourth slidable button 203d are formed on the battery box 200 respectively adjacent ends of the first, second, third, and fourth battery spaces 201 a, 201 b, 201 c, 201 d. If the battery space 201 a receives a battery which has enough electrical power, users can move the corresponding button 203a up. If the battery space 201 b receives a battery which is run out, users can move the corresponding button 203b down. Thus, users can distinguish the battery which has enough electrical power and the battery which is run out. A port is formed at an end of the battery box 200. A plurality of tabs 205 is formed in the port. The tabs 205 are electrically connected to the elastic metal tabs in the first, second, third, and fourth battery spaces 201 a, 201 b, 201 c, 201d.

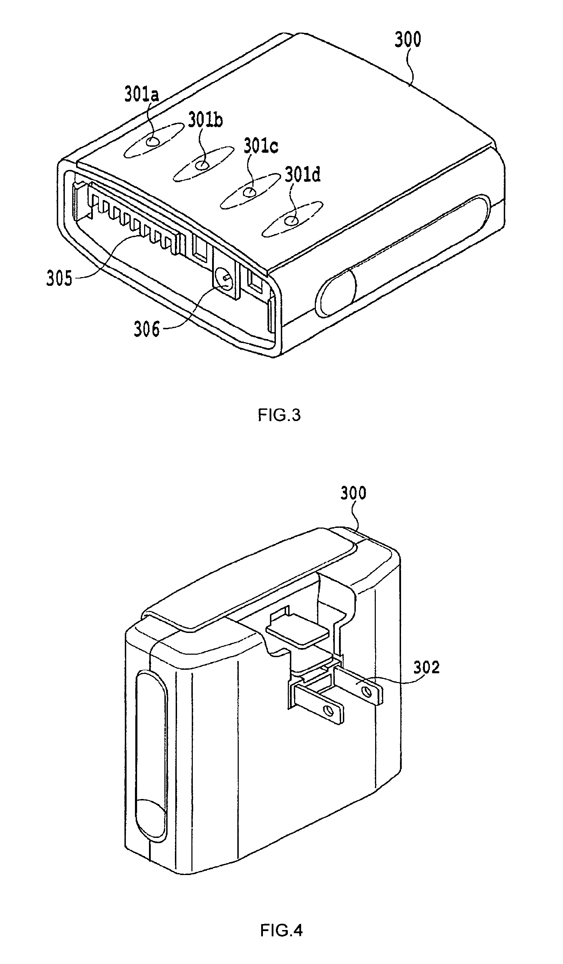

Referring also to FIGs. 3 and 4, the charge part 300 includes a port at an end thereof. The port defines a plurality of holes 305 for receiving the tabs 205 of the battery box 200 to electrically connect the charge part 300 to the battery box 200, and a convert hole 306. A convert hole 306 is formed adjacent the port. A first indicator 301a, a second indicator 301 b, a third indicator 301 c, a fourth indicator 301 d are formed on a side surface of the charge part 300, respectively corresponding to the first, second, third, and fourth battery spaces 201a, 201b, 201c, 201d, for indicating the states of batteries 202 in the battery spaces 201 a, 201 b, 201 c, 201 d. Two hooks (not labeled) are formed at the end having the port of the charge part 300. The hooks can be engaged in slots defined in the end having the port of the battery box 200, for mechanically connecting the charge part 300 to the battery box 200. The charge part 300 includes a plug 302 at a side surface thereof opposing the indicators 301a-301d.

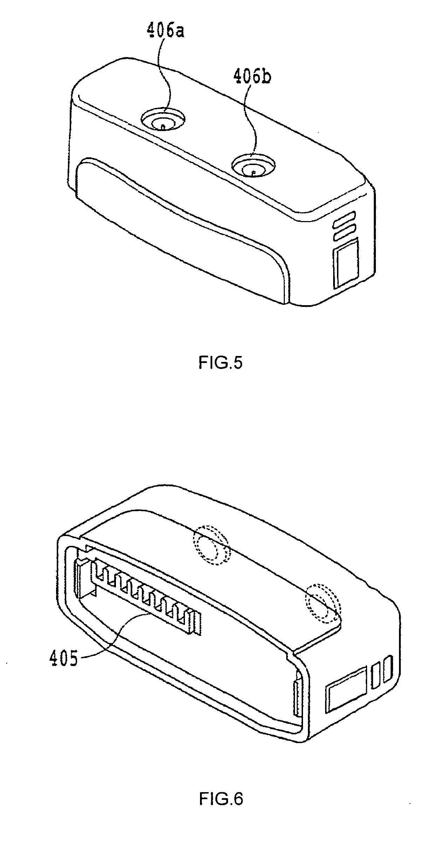

Referring also to FIGs. 5 and 6, the converter 400 defines a first hole 406a and a second hole 406b in an end thereof. A port is formed at an opposite end of the converter 400. The port of the converter 400 is electrically connected to the tabs 205 of the battery box 200 via a hole 405 of its port. The converter 400 is capable of being a supply part for supply power for the electrical devices.

The ports of the converter 400 and the charge part 300 are compatible with the port of the battery box 200.

Referring again to FIG. 7, the cable 500 includes a pin 501 at an end and a receiving hole 502 at an opposite end. The pin 501 is capable of being engaged in the convert hole 306 of the charge part 300, or the first hole 406a or the second hole 406b of the converter 400. The joint 550 includes a pin 551 at an end and a port 552 at an opposite end compatible with ports of electrical devices. The receiving hole 502 of the cable 500 receives the pin 551 of the joint 550 to be capable of charging mobile telephone.

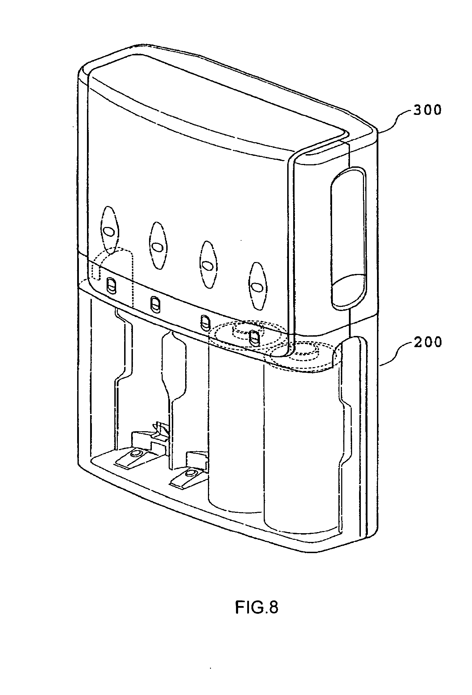

Referring also to FIG. 8, When the charge part 300 is assembled to the battery box 200 via the ports, the hooks of the charge part 300 are engaged in the slots of the battery box 200. The plug 302 of the charge part 300 can be plugged into a socket of a power to charge the batteries 202 accommodated in the battery box 200.

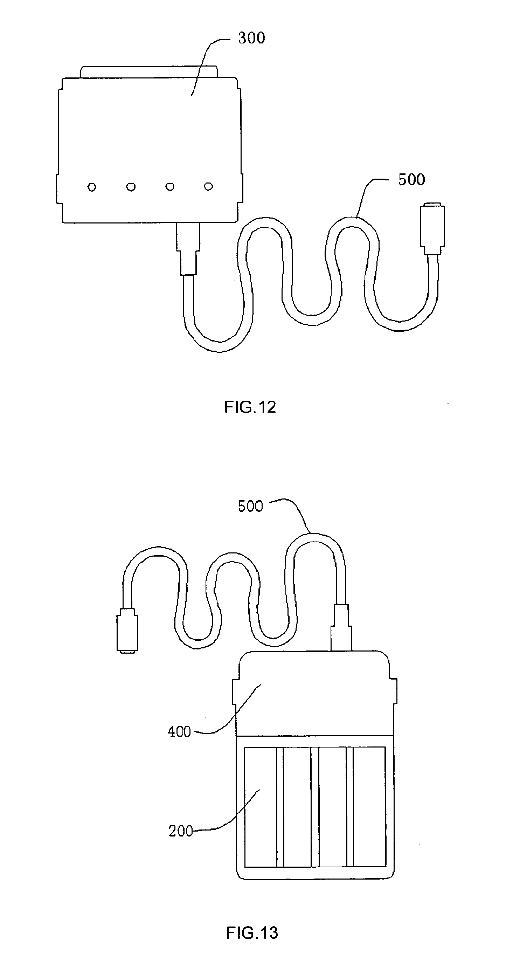

Referring also to FIG. 12, the pin 501 of the cable 500 can be directly inserted into the convert hole 306 of the charge part 300 to directly charge the flashlight, the CD player or other electrical devices.

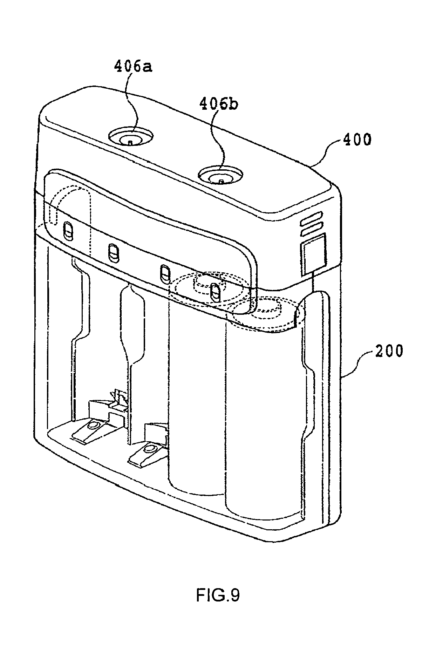

Referring also to FIGs. 9 and 13, when the battery box 200 accommodating batteries is electrically connected to the converter 400, the converter 400 can charge or supply power for the mobile phone, the camera, the MP3, the PDA, the GPS, the game device, and other digital devices via the cable 500 even the joint 550 sometimes. Moreover, the batteries in the battery box 200 can directly charge or supply power for the electrical devices. In a second embodiment, a depressed portion 310 is defined in the charge part 300 or the converter, and metal tabs 311 or connectors are formed in the depressed portion 310 of at a side surface of the converter or the charge part 300. The battery box 200 is electrically received in the depressed portion 310 via the metal tabs 311 or connectors.

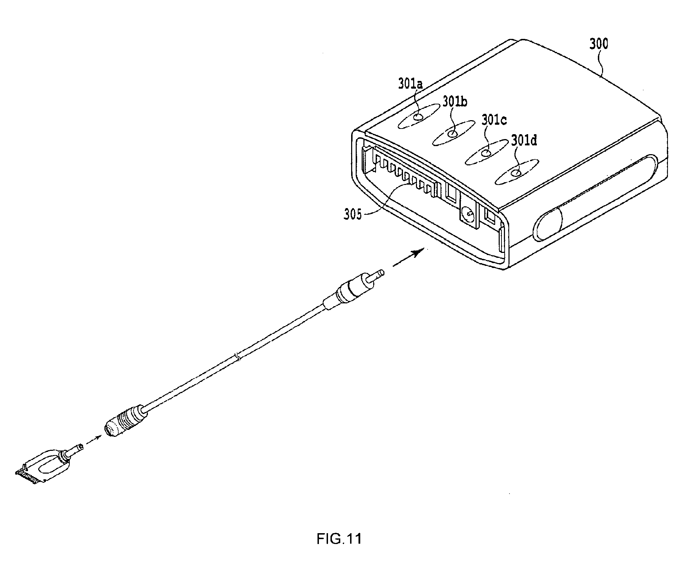

Referring also to FIG. 11, the cable 500 is connected to the charge part 300 along the arrow direction.

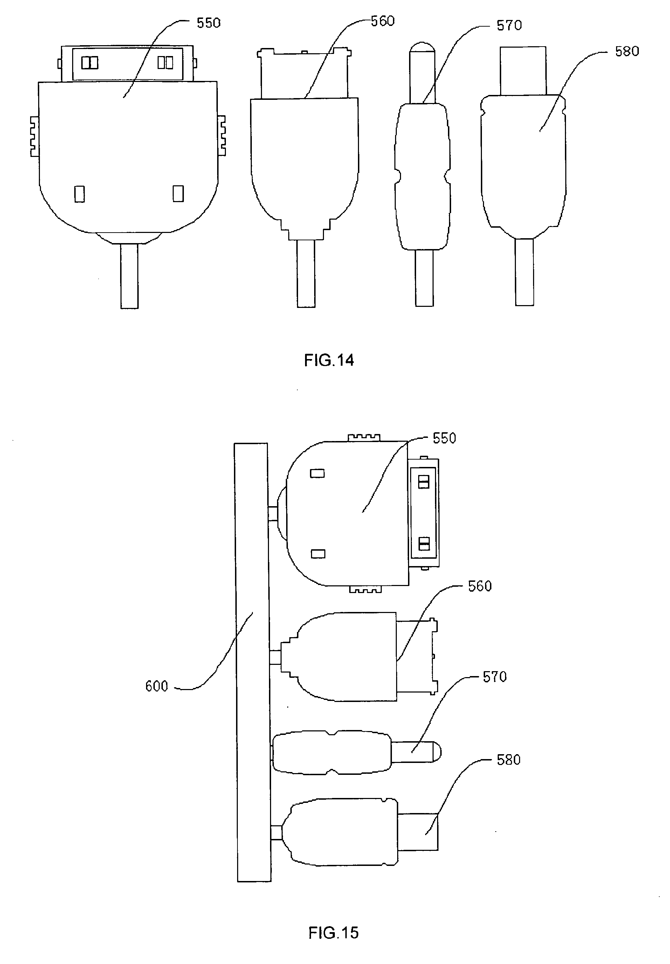

Referring also to FIGs. 14 and 15, four types of mobile telephone joints 550, 560, 570, 580 are mounted to a bracket 600.

The battery box 200 has tabs 205 and hooks, so an electrical device having a cooperating port is capable of engaging with the battery box 200 to form an integrated product, such as a flashlight, a fan, and so on.

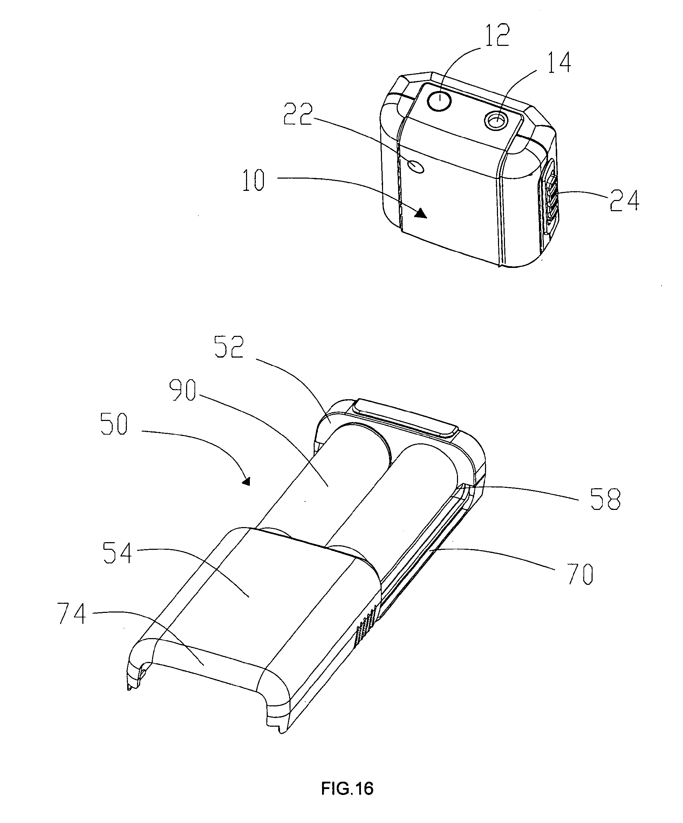

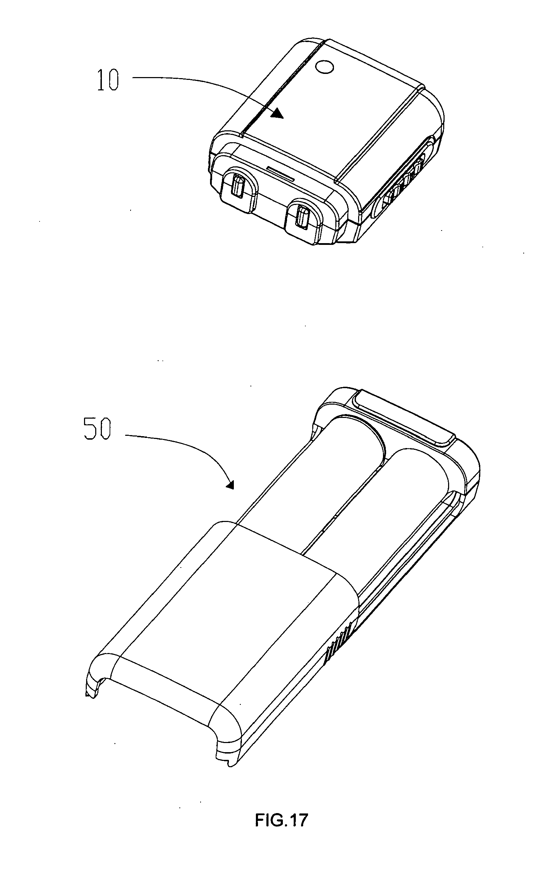

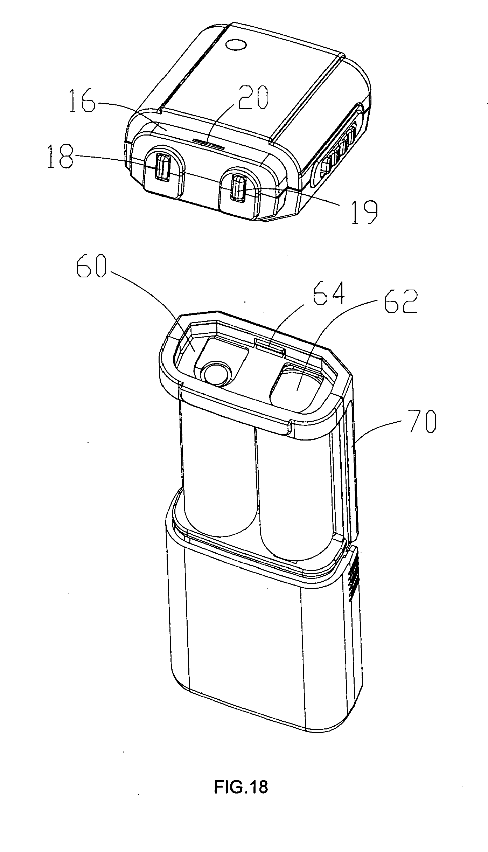

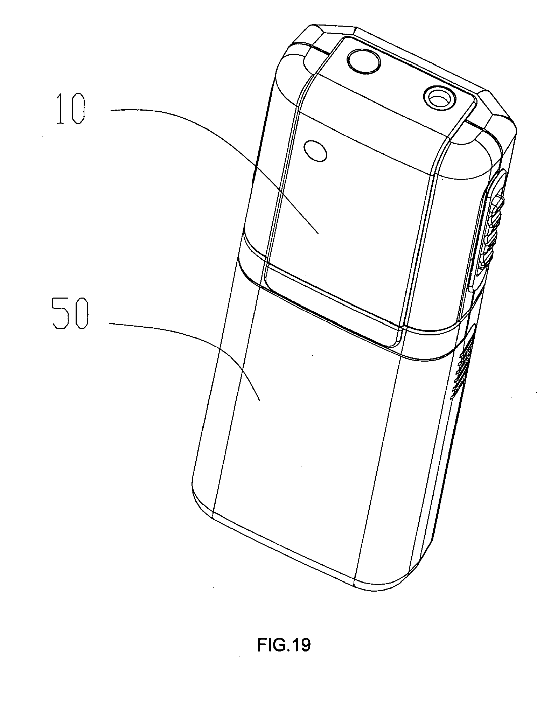

Referring to FIGs. 16 to 19, a power charging and supplying system in accordance with a third embodiment of the present invention includes a charge and supply part 10, and a battery box 50 mountable to the charge and supply part 10.

The charge and supply part 10 includes a charge circuit, a supply circuit, and a diverter switch 24 changing the charge and supply part 10 between charging the batteries 90 of the battery box 50 and supplying power for small electrical devices, such as mobile phones, cameras, MP3s, PDAs, GPSs, game devices, and etc.

The battery box 50 is detachable from the charge and supply part 10. The battery box 50 is capable of receiving secondary batteries 90 or dry batteries. The charge circuit of the charge and supply part 10 can charge the secondary batteries 90, and the secondary batteries 90 or the dry batteries can supply power for the electrical devices via the supply circuit.

The charge and supply part 10 includes a first indicator 12 and a port 14 at a first end surface thereof. A protrusion 16 extends from a second end surface opposite to the first end surface of the charge and supply part 10. Two electrodes 18, 19 extend from an outer surface of the protrusion 16, for electrically contacting electrodes of the secondary batteries 90 or the dry batteries. A slot 20 is defined in each wider side surface of the protrusion 16. A second indicator 22 is set in a wider side surface of the charge and supply part 10, and a button mounted to the diverter switch 24 is set in a narrower side surface of the charge and supply part 10. The button can move among three positions: a charge position, a supply position, and a shutoff position.

The battery box 50 includes a body 52 and a cover 54 movably mounted to the body 52. The body 52 is generally U-shaped. A battery space is defined in the body 52. In this embodiment, the battery space includes two battery slots 58, for respectively accommodating two secondary batteries 90 or two dry batteries. A depressed portion 60 is defined in a first end surface of the body 52, corresponding to the protrusion 16 of the charge and supply part 10. A bottom of the depressed portion 60 defines two through holes 62, corresponding to the battery slots 58. An elastic hook 64 extends from each wider side surface of the depressed portion 60. The electrodes 18, 19, and two elastic metal tabs (not shown) mounted to an end opposite to the first end surface of the body 52, of the battery slots 58, together form a contact electrode. The secondary batteries 90 or the dry batteries are connected in series via the electrodes 18, 19 and the elastic metal tabs, and are connected to the charge circuit or the supply circuit via the electrodes 18, 19. A second end surface adjacent the metal tabs of the battery body 52 defines a generally n-shaped depressed portion along sides thereof. Two slide slots 70 are defines in opposite sides of the body 52. The cover 54 is generally n-shaped. Two projecting portions extend from opposite sides of cover 54, corresponding to the slide slots 70 of the body 52. A generally n-shaped blocking portion 74 is formed at an end of the cover 54, corresponding to the n-shaped depressed portion of the body 52.

In use, the protrusion 16 of the charge and supply part 10 is inserted into the depressed portion 60 of the body 52 of the battery box 50. The hooks 64 of the body 52 are engaged in the slots 20 of the protrusion 16, to assemble the battery box 50 to the charge and supply part 10. The electrodes 18, 19 of the charge and supply part 10 are respectively located at the through holes 62 of the body 52. The secondary batteries 90 or the dry batteries are accommodated in the battery slots 58 of the body 52 to be electrically connected in series. The cover 54 is covered to the body 52. The projecting portions of the cover 54 are slide in the slide slots 70 of the body 52, until the blocking portion 74 of the cover 54 is engaged in the n-shaped depressed portion of the body 52. An opposite end of the cover 54 is propped against the body 52. The cover 54 can prevent the body 52 from dust and damp.

In assembling the battery box 50 from the charge and supply part 10, the charge and supply part 10 is rotated toward its one wider side surface. The hooks 64 of the battery box 50 are disengaged from the slots 20 of the charge and supply part 10. Thus, the charge and supply part 10 is detached from the battery box 50.

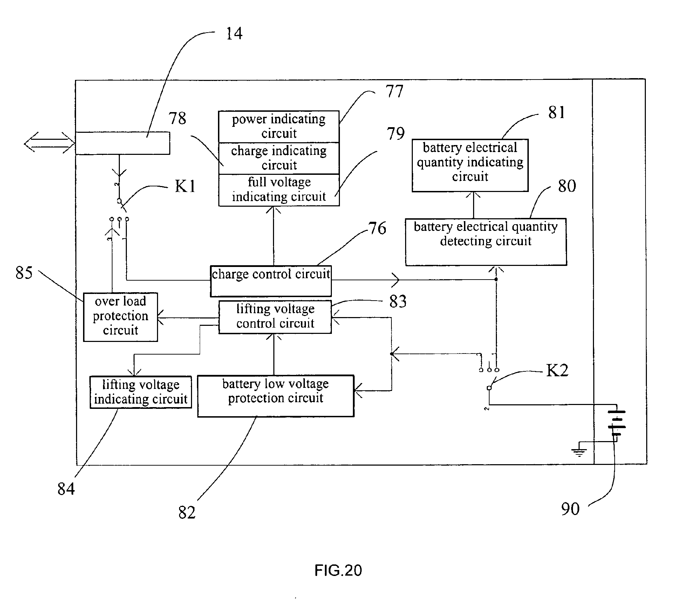

Referring also to FIG. 20, the diverter switch 24 of the charge and supply part 10 is a double-pole triple throw switch, and is generalized two switches K1 and K2. The port 14 is connected to a pole of the switch K1. A first throw end of the switch K1 is connected to an input of the charge circuit. A second throw end of the switch K1 is connected to an output of the supply circuit. A third throw end of the switch K1 is idle contact. The charge circuit includes a charge control circuit 76, a power indicating circuit 77, a charge indicating circuit 78, a full voltage indicating circuit 79, a battery electrical quantity detecting circuit 80, and a battery electrical quantity indicating circuit 81. The supply circuit includes a battery low voltage protection circuit 82, a lifting voltage control circuit 83, a lifting voltage indicating circuit 84, and an over load protection circuit 85. The first thrown end of the switch K1 is connected to the charge control circuit 76. The charge control circuit 76 is connected to the battery electrical quantity detecting circuit 80 and a first throw end of the switch K2. The battery electrical quantity detecting circuit 80 is further connected to the battery electrical quantity indicating circuit 81. The charge control circuit 76 is further connected to the power indicating circuit 77, the charge indicating circuit 78, and the full voltage indicating circuit 79. A pole K2 of the switch K2 is connected to the electrode 18 of the charge and supply part 10. A second throw end of the switch K2 is connected to the battery low voltage protection circuit 82 and the lifting voltage control circuit 83. A third throw end of the switch K2 is idle contact. The battery low voltage protection circuit 82 is further connected to the lifting voltage control circuit 83. The lifting voltage control circuit 83 is further connected to the lifting voltage indicating circuit 84 and the over load protection circuit 85. The over load protection circuit 85 is connected to the second throw end of the switch K1.

In charging the secondary batteries 90, the button mounted to the switch 24 is moved to the charge position. The pole of the switch K1 is thrown to its first throw end, and the pole of the switch K2 is thrown to its first throw end. The secondary batteries 90 are electrically connected to the port 14 via the charge circuit. Thus, a power supply that is electrically connected to the port 14 can charge the secondary batteries 90. Generally, an input votage is 5Vdc, an input current is 500Ma. In supplying power for one electrical device, the button mounted to the switch 24 is moved to the supply position. The pole of the switch K1 is thrown to its second throw end, and the pole of the switch K2 is thrown to its second throw end. The secondary batteries 90 or the dry batteries are electrically connected to the port 14 via the supply circuit, to supply power for the electrical device that is electrically connected to the port 14. Generally, an output voltage is 5.6Vdc, and an output current is 500mA. When the power charging and supplying system is not used, the button mounted to the switch 24 is moved to the shutoff position. The pole of the switch K1 is thrown to its third throw end, and the pole of the switch K2 is thrown to its third throw end.

The charge control circuit 76 is a traditional charge control circuit to charge the secondary batteries 90. The power indicating circuit 77 is connected to the first indicator 12, for indicating whether the power charging and supplying system works or not. The charge indicating circuit 78 and the full voltage indicating circuit 79 are connected to the second indicator 22, for indicating status of the secondary batteries 90. The battery electrical quantity detecting circuit 80 is configured for detecting an electrical quantity of the second batteries 90 or the dry batteries. The battery electrical quantity indicating circuit 81 is connected to the first indicator 12. The battery low voltage protection circuit 82 is configured for protecting the secondary batteries 90 or the dry batteries when their voltage is too low. The lifting voltage control circuit 83 is configured for lifting a voltage of the secondary batteries 90 or the dry batteries when their voltage is too low. The lifting voltage indicating circuit 84 is connected to he second indicator 22, for indicating status of lifting voltage. The over load protection circuit 85 is configured for protecting the power charging and supplying system when a load is too great. The above-mentioned circuits are general circuits that can achieve the corresponding functions.

It is believed that the present invention and its advantages will be understood from the foregoing description, and it will be apparent that various changes may be made thereto without departing from the spirit and scope of the invention or sacrificing all of its material advantages, the examples hereinbefore described merely being preferred or exemplary embodiments of the invention.

## Claims

1. A power charging and supplying system, comprising:
a battery box for receiving at least one battery; and
a charge and supply part mounted to the battery box and capable of electrically connected to said at least one battery, the charge and supply part capable of charging said at least one battery via power supply if said at least one battery is a secondary battery, and supplying power for electrical devices via said at least one battery.

2. The power charging and supplying system as claimed in claim 1, wherein the charge and supply part comprises a charge part and a converter selectively mounted to the battery box, the charge part is configured for charging said at least one battery if said at least one battery is a secondary battery, and the converter is configured for supplying power for the electrical devices.

3. The power charging and supplying system as claimed in claim 2, wherein the battery box has a first port, the convert has a second port compatible with the first port of the battery box; and the charge part has a third port compatible with the first port of the battery box, the first port of the battery box is selectively electrically connected to the second port of the convert or the third port of the charge part.

4. The power charging and supplying system as claimed in claim 3, wherein the first port of the battery box is selectively connected to the second port of the converter or the third port of the charge part via a mechanism, the mechanism comprises a hook formed from the converter or the charge part, and a slot defined in the battery box, or the mechanism comprises a depressed portion formed on the converter or the charge part, for receiving the battery box.

5. The power charging and supplying system as claimed in claim 4, wherein the hook is formed on an end of the port of the charge part, the slot is defined in an end of the port of the battery box.

6. The power charging and supplying system as claimed in claim 4, wherein metal tabs or connectors are formed in the depressed portion of at a side surface of the converter or the charge part.

7. The power charging and supplying system as claimed in claim 3, further comprising a cable, wherein the charge part defines a receiving hole therein, for electrically receiving a corresponding end of the cable.

8. The power charging and supplying system as claimed in claim 7, still further comprising a joint, wherein the joint has a pin at an end and a port compatible with ports of electrical devices at an opposite end, the pin of the joint is electrically engaged with an opposite end of the cable.

9. The power charging and supplying system as claimed in claim 3, wherein at least one battery space is formed on the battery box, for receiving said at least one battery, metal tabs are mounted to said at least one battery space, for being electrically connected to the converter and the charge part.

10. The power charging and supplying system as claimed in claim 1, wherein the charge and supply part comprises a port configured for a plug of a wire of a power or an electronic device plugging thereinto, a contact electrode configured for electrically connecting to said at least one battery, a charge circuit, a supply circuit, and a diverter switch, an output of the charge circuit and an input of the supply circuit are selectively connected to the contact electrode, the diverter switch moves between a charge position and a supply position, when the diverter switch is in the charge position, the port is connected to the input of the charge circuit for charging said at least one battery via the power when said at least one battery is a secondary battery; when the diverter switch is in the supply position, the port is connected to the output of the supply circuit for supplying power for the electrical device via said at least one battery.

11. The power charging and supplying system as claimed in claim 10, wherein the diverter switch is capable of moving to a shutoff position, the diverter switch is a double-pole triple throw switch and is generalized a first switch and a second switch, a pole of the first switch is connected to the port, a first throw end of the first switch is connected to the input of the charge circuit, a second throw end of the first switch is connected to the output of the supply circuit, a third throw end of the first switch is idle contact; a pole of the second switch is connected to the contact electrode, a first throw end of the second switch is connected to the output of the charge circuit, a second throw end of the second switch is connected to the input of the supply circuit, a third throw end of the second switch is idle contact.

12. The power charging and supplying system as claimed in claim 11, wherein the charge circuit comprises a charge control circuit, a charge indicating circuit, a full voltage indicating circuit, and a power indicating circuit, an input of the charge control circuit is connected to the first throw of the first switch, a first output of the charge control circuit is connected to the charge indicating circuit, the full voltage indicating circuit, and the power indicating circuit, a second output of the charge control circuit is connected to the first throw end of the second switch.

13. The power charging and supplying system as claimed in claim 12, wherein the charge circuit further comprises a battery electrical quantity detecting circuit and a battery electrical quantity indicating circuit, the battery electrical quantity detecting circuit is connected to the first throw end of the second switch and the battery electrical quantity indicating circuit.

14. The power charging and supplying system as claimed in claim 11, wherein the supply circuit comprises a battery low voltage protection circuit, a lifting voltage control circuit, a lifting voltage indicating circuit, and an over load protection circuit, the battery low voltage protection circuit and the lifting voltage control circuit are connected to the second throw end of the second switch, the lifting voltage control circuit is further connected to the lifting voltage indicating circuit and the over load protection circuit, the over load protection circuit is further connected to the second throw end of the first switch.

15. The power charging and supplying system as claimed in claim 10, wherein a protrusion extends from an end surface of the charge and supply part, two slots are respectively defined in opposite wider side surfaces of the charge and supply part; the battery box comprises a body with a depressed portion being defined in an end surface thereof, for engaging with the protrusion of the charge and supply part, two elastic hooks are extended from opposite wider side surfaces of the depressed portion of the body, for being engaged in the corresponding slots of the charge and supply part.

16. The power charging and supplying system as claimed in claim 15, wherein at least one battery slot for receiving said at least one battery is defined in the body, two slide slots are defined in opposite sides of the body, the battery box further comprises a cover capable of being covered to the body, two projecting portions extend from opposite sides of the cover, for being slidable in the corresponding slide slots of the body.

17. The power charging and supplying system as claimed in claim 16, wherein the contact electrode includes an electrode protruding from an outer surface of the protrusion, and a metal tab mounted to an end of the battery slot, a bottom of the depressed portion of the body defines a through hole for the electrode passing therethrough to contact a corresponding electrode of said at least one battery, the metal tab is configured for contact the other electrode of said at least one battery.

18. The power charging and supplying system as claimed in claim 10, wherein the battery box is capable of receiving two secondary batteries in series, when the diverter switch is in the charge position, the port of the charge and supply part is connected to the output of the charge circuit for charging the secondary batteries, when the diverter switch is in the supply position, the port of the charge and supply part is connected to the output of the supply circuit for supplying power for the electrical devices.

19. The power charging and supplying system as claimed in claim 10, wherein the battery box is capable of receiving two dry batteries in series, when the diverter switch is in the supply position, the port of the charge and supply part is connected to the output of the supply circuit for supplying power for the electrical devices.
